# EUROPEAN PATENT APPLICATION

(11) **EP 2 700 852 A1**
(43) Date of publication of application: **26.02.2014**
(21) Application number: 11863868.3
(22) Date of filing: 16.06.2011
(51) Int. Cl.: F16K 11/08

(54) **PUMPING MECHANISM, DISTRIBUTING VALVE THEREOF AND CONCRETE PUMPING MACHINE**

(30) Priority: 22.04.2011 CN 201110103005
(71) Applicant: Hunan Sany Intelligent Control Equipment Co., Ltd., Hunan 410100 (CN); Sany Heavy Industry Co., Ltd., Changsha Hunan 410100 (CN)
(72) Inventor: LIANG, Yongjiao, Hunan 410100 (CN); LIU, Guifeng, Hunan 410100 (CN)
(74) Representative: Michalski Hüttermann & Partner Patentanwälte
(86) International application number: PCT/CN2011/075795
(87) International publication number: WO 2012/142788

(57) **Abstract**

A pumping mechanism and the distributing valve thereof and a concrete pumping machine are disclosed. The distributing valve includes a valve casing (100) and a valve core (200) located in the pumping chamber of the valve casing. The valve core is rotatably connected to the valve casing, thus forming a main rotating axis (O). The valve casing has a discharge hole (103) throughout the casing wall, a first suction hole (101) and a second suction hole (102). The valve core has a distributing port (202) and a feed port (201) communicated with a material container. A pumping channel is formed between the peripheral face of the valve core and the inner wall face of the pumping chamber. The peripheral face of the valve core is provided with two cutting plates (210) protruding from two sides of the distributing port respectively. The outer side faces of the two cutting plates are rotatably sealedly matched with the sealing face of the valve casing. In a first state, the distributing port is communicated with the first suction hole through the space between the two cutting plates. In a second state, the distributing port is communicated with the second suction hole through the space between the two cutting plates. The distributing valve has a smaller matching area for cutting so as to ensure better sealing performance whilst have higher driving performance.

## Description

The present application claims the priority to the Chinese patent application No. 201110103005.3 filed with the State Intellectual Property Office of the PRC on April 22, 2011 and entitled "A Pumping Mechanism and the Distributing Valve Thereof and A Concrete Pumping Machine", which is incorporated herein by reference in its entirety.

### FIELD OF THE INVENTION

The present invention relates to a technology of pumping a viscous material, particularly concrete, and especially to the distributing valve of a pumping mechanism, and also relates to a pumping mechanism comprising the distributing valve, and a concrete pumping machine comprising the pumping mechanism.

### BACKGROUND OF THE INVENTION

Currently, during conveying concrete and other viscous materials, usually a pumping mechanism is used to pump the materials to convey concrete or other viscous materials from one position to another predetermined position, to achieve a predetermined object. The pumping mechanism usually comprises a conveying cylinder, a distributing valve and a corresponding driving mechanism; wherein, the distributing valve is a key part of the pumping mechanism, and the prior art also provides distributing valves of multiple structures.

China patent document CN101245866B discloses a distributing valve. The distributing valve comprises a valve casing and a valve core located within the valve casing. The valve casing comprises a discharge hole, a first suction hole and a second suction hole; the first suction hole and the second suction hole respectively communicate with a first conveying cylinder and a second conveying cylinder. The valve core comprises a lateral distributing port and an upward feed port communicating with a hopper; the valve casing is in rotating connection with the valve core so that the valve core can rotate a certain angle with respect to the valve casing; a pumping channel is formed between the peripheral face of the valve core and the inner wall face of the valve casing, and communicates with all of the discharge hole, the first suction hole and the second suction hole. The valve casing and the valve core are in rotating matching or cooperating with a portion corresponding to the pumping channel, and a cutting portion is formed which can cut the materials such as concrete.

When the distributing valve is used for working, a driving mechanism is used to rotate the valve core with respect to the valve casing, and the cutting portion cuts the material so that the distributing valve can switch between two working states. In a first working state, the valve core rotates to a right limit position relative to the valve casing, the distributing port communicates with the first suction hole, and the first suction hole, the distributing port and the feed port form a suction passage; the second suction hole keeps communication with the discharge hole through the pumping channel, and the second suction hole, the pumping channel and the discharge hole form a pumping passage; then, the first conveying cylinder can suck the material from a hopper through the suction passage, and the second conveying cylinder can pump the material to the outside through the pumping passage. In a second working state, the valve core rotates to a left limit position relative to the valve casing, the distributing port communicates with the second suction hole, and the second suction hole, the distributing port and the feed port form a suction passage; the first suction hole keeps communication with the discharge hole through the pumping channel, and the first suction hole, the pumping channel and the discharge hole form a pumping passage; then the first conveying cylinder can pump the material to the outside through the pumping passage, and second conveying cylinder can suck the material through the pumping passage.

During using the distributing valve, the distributing valve can be arranged outside the hopper, and then the suction efficiency of the conveying cylinders can be improved. However, during using the distributing valve, as the specific constitutions of the pumping passage and the suction passage are changed repeatedly, the sealing between the pumping passage and the suction passage is mainly achieved through the rotating matching face of the cutting portion. When the distributing valve is used, the better the sealing performance of the rotating matching face of the valve core and the valve casing is, the higher pumping pressure the pumping mechanism can bear, then a high pumping ability can more meet actual pumping needs. While the enhancement of the sealing performance will increase the driving force required by driving the rotation of the valve core, lower the driving performance of the distributing valve and increase the energy consumption of the distributing valve.

### SUMMARY OF THE INVENTION

Therefore, the present invention aims to provide a distributing valve of a pumping mechanism, and the distributing valve comprises the above valve casing and valve core, and has high driving performance while ensuring fine sealing performance.

Based on the above distributing valve, the present invention also provides a pumping mechanism comprising the distributing valve and a concrete pumping machine comprising the pumping mechanism.

The distributing valve of the pumping mechanism provided by the present invention includes a valve casing and a valve core located in the pumping chamber of the valve casing, and the valve core is rotatably connected to the valve casing, thus forming a main rotating axis; the valve casing has a discharge hole throughout the casing wall, a first suction hole and a second suction hole; the valve core has a distributing port and a feed port communicated with a material container; a pumping channel is formed between the peripheral face of the valve core and the inner wall face of the pumping chamber; the peripheral face of the valve core is provided with two cutting plates protruding from two sides of the distributing port respectively and being parallel to the main rotating axis; the outer side faces of the two cutting plates are rotatably sealedly matched with the sealing face of the valve casing; in a first state, the distributing port is communicated with the first suction hole through the space between the two cutting plates; and in a second state, the distributing port is communicated with the second suction hole through the space between the two cutting plates.

Optionally, the outer side faces of the cutting plates are arc-shaped surfaces.

Optionally, the valve casing comprises a valve body and a seal adjustment plate; the seal adjustment plate can be radially and slideably mounted within the adjustment plate groove of the valve body, and the inner side face of the seal adjustment plate at least forms a part of the sealing face of the valve casing; and the valve casing further comprises an adjustment assembly changing the matching gap between the seal adjustment plate and the cutting plates.

Optionally, when the outer side faces of the cutting plates match the inner side face of the seal adjustment plate, the seal adjustment plate corresponding to the matching and the cutting plates extend in one plane.

Optionally, the valve casing comprises three said seal adjustment plates, and the inner side faces of the three seal adjustment plates form the sealing face; in the first state, the outer side faces of two said cutting plates are respectively sealedly matched with the inner side face of a first seal adjustment plate and the inner side face of a second seal adjustment plate, and in the second state, the outer side faces of two said cutting plates are respectively sealedly matched with the inner side face of the second seal adjustment plate and the inner side face of a third seal adjustment plate.

Optionally, the peripheral face of the upper end portion of the valve core is in rotating matching with the inner wall face of the upper port of the valve casing; the upper opening of the adjustment plate groove is located within the upper surface of the valve casing, and the seal adjustment plates are mounted into the adjustment plate groove from the upper opening; the upper opening communicates with the upper port of the valve casing, and thickness of the cutting plates is not larger than that of the seal adjustment plates.

Optionally, the peripheral face of the lower end portion of the lower end portion of the valve core is in rotating matching with the inner wall face of the lower port of the valve casing; and the valve body is integrally formed.

Optionally, the cutting plate comprises a cutting plate body and a hard alloy sheet fixed on the outer side face of the cutting plate body, and the outer surface of the hard alloy sheet forms the outer side face of the cutting plate; or, the seal adjustment plate comprises a plate body and a hard alloy sheet fixed at the inner side face of the plate body, and the surface of the hard alloy sheet towards the valve core forms the inner side face of the seal adjustment plate.

The pumping mechanism provided by the present invention comprises a conveying cylinder, a material container and a distributing valve, and the material container is provided with a discharge port facing downward, the distributing valve is the distributing valve of any of the above pumping mechanisms, and the feed port of the valve core communicates with the discharge port.

The concrete pumping machine provided by the present invention comprises a machine body and a pumping mechanism, the pumping mechanism is the above pumping mechanism, and is mounted on the machine body.

In the distributing valve of the pumping mechanism provided by the present invention, the peripheral face of the valve core is provided with cutting plates protruding from two sides of the distributing port respectively; the outer side faces of the two cutting plates are rotatably sealedly matched with the sealing face of the valve casing. In a first state, the distributing port is communicated with a first suction hole through the space between the two cutting plates. In a second state, the distributing port is communicated with a second suction hole through the space between the two cutting plates. When the distributing valve is used, the outer side faces of the cutting plates keep rotatable sealed matching with the sealing face of the valve casing, and form the cutting portion of the distributing valve; the cutting portion can cut concrete or other viscous materials, and then achieves the transformation of the distributing valve. Compared with the prior art, in the distributing valve provided by the present invention, the cutting portion has a small matching area, then the matching precision of the matching face can be easily improved, and then the sealing performance of the cutting portion is ensured; likewise, as the matching face of the cutting portion is small, during the cutting the material generates a small friction force and wearing to the matching face, thus the friction generated by the cutting portion can be decreased, and the driving force needed by driving the rotation of the valve core is decreased; therefore, high driving performance of the distributing valve can be ensured while ensuring fine sealing performance of the distributing valve.

In a further technical solution, the outer side faces of the cutting plates are arc-shaped; the technical solution can improve cutting the materials, make the state switching of the distributing valve convenient, and alleviate the adhesion between the materials and the valve core or valve casing.

In a further technical solution, the valve casing of the distributing valve further comprises a valve body, a seal adjustment plate and an adjustment assembly adjusting the matching gap between the outer side faces of the cutting plates and the sealing face; the sealing gap and the friction force of the cutting portion can be adjusted via the adjustment assembly; then, according to pumping needs, the distributing valve can adapt to different pumping pressures. When a material needs to be pumped to a high or far location, by way of the adjustment assembly, the matching gap between the outer side faces of the cutting plates and the sealing face can be reduced, and the sealing performance of the distributing valve is improved, so as to increase the pumping pressure of the pumping mechanism; when a material needs to be pumped to a low or near location, the matching gap between the outer side faces of the cutting plates and the sealing face can be increased by way of the adjustment assembly, so as to decrease the driving force needed by driving the rotation of the valve core, improve the driving performance of the distributing valve, and lower the energy consumption of the distributing valve.

In a further technical solution, when the outer side faces of the cutting plates match the inner side faces of the seal adjustment plates, the corresponding seal adjustment plate and the cutting plate extend in one plane; therefore, the cutting plates can better match the seal adjustment plates, and the matching gap between the two can be conveniently adjusted.

In a further technical solution, the valve casing comprises three said seal adjustment plates, and the inner side faces of the three seal adjustment plates form the sealing face; in the first state of the distributing valve, the outer side faces of two said cutting plates are respectively sealedly matched with the inner side face of a first seal adjustment plate and the inner side face of a second seal adjustment plate; and in the second state of the distributing valve, the outer side faces of two said cutting plates are respectively sealedly matched with the inner side face of the second seal adjustment plate and the inner side face of a third seal adjustment plate. Thus, the adjustment assembly can adjust the positions of the inner side faces of the three seal adjustment plates, so that the inner side faces of the three seal adjustment plates are located within one arc-shaped face, thereby better ensuring the reliability of the rotatable sealed matching between the sealing face of the valve casing and the outer side faces of the respective cutting plates.

In a further technical solution, the peripheral face of the upper end portion of the valve core is in rotating matching with the inner wall face of the upper port of the valve casing; the upper opening of the adjustment plate groove is located within the upper surface of the valve body, and the seal adjustment plates can be mounted into the adjustment plate groove from the upper opening. In this technical solution, the seal adjustment plates can mounted via the upper opening of the adjustment plate groove; as the thickness of the cutting plate is not larger than that of the seal adjustment plate, the valve core and its cutting plate can also be mounted into the pumping chamber of the valve casing through the upper port of the valve casing and the adjustment plate groove, and then the mounting and maintenance of the distributing valve are made convenient.

In a further technical solution, the peripheral face of the lower end portion of the valve core is in rotating matching with the inner wall face of the lower port of the valve casing; and the valve body is integrally formed. Based on the above technical effect, this technical solution can maintain a simple structure of the valve body; meanwhile, the integrally formed valve body increases the rigidity of the valve casing or the valve body, enhances the overall strength of the distributing valve, so that the distributing valve can meet the need of a high pumping pressure, and the pumping ability of the pumping mechanism comprising the distributing valve is improved.

In a further technical solution, the cutting plate comprises a cutting plate body and a hard alloy sheet fixed on the outer side face of the cutting plate body, and the outer surface of the hard alloy sheet forms the outer side face of the cutting plate; or, the seal adjustment plate comprises a plate body and a hard alloy sheet fixed at the outer side face of the plate body, and the surface of the hard alloy sheet towards the valve core forms the inner side face of the seal adjustment plate. While ensuring the above technical effects, this technical solution can improve the wearing resistance of the cutting portion of the distributing valve and prolong the service life of the distributing valve.

### BRIEF DESCRIPTION OF THE DRAWINGS

Fig.1 is a schematic diagram of the three-dimensional structure of the distributing valve provided by the present invention;
Fig. 2 is a schematic diagram of the sectional structure of the distributing valve shown in Fig. 1;
Fig. 3 is a schematic diagram of the three-dimensional assembling structure of the distributing valve shown in Fig. 1;
Fig. 4 is a schematic diagram of the three-dimensional structure of the valve core in the distributing valve provided by the present invention;
Fig. 5 is a schematic diagram of the structure of the valve body in the distributing valve provided by the present invention;
Fig. 6 is a schematic diagram of the structures of the seal adjustment plate and the adjustment assembly;
Fig. 7 is a schematic diagram of the front structure of the pumping mechanism provided by the present invention; and
Fig. 8 is an A-direction diagram of Fig. 7.

### DETAILED DESCRIPTION OF THE PRESENT INVENTION

The present invention will be detailed hereinafter taken in combination with the drawings, and the following description are just demonstrative and explanatory, and shall not be understood as limitations in any way on the scope of protection of the present invention.

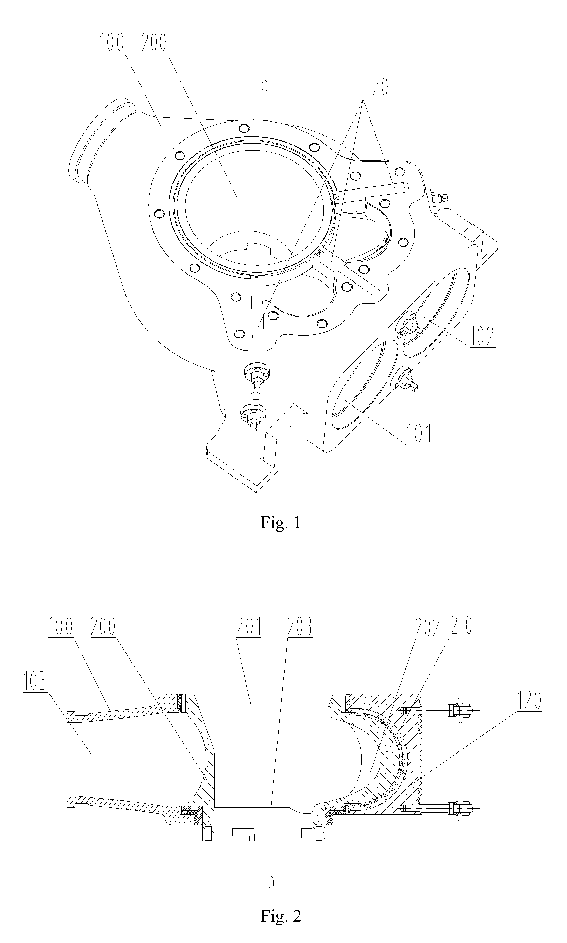

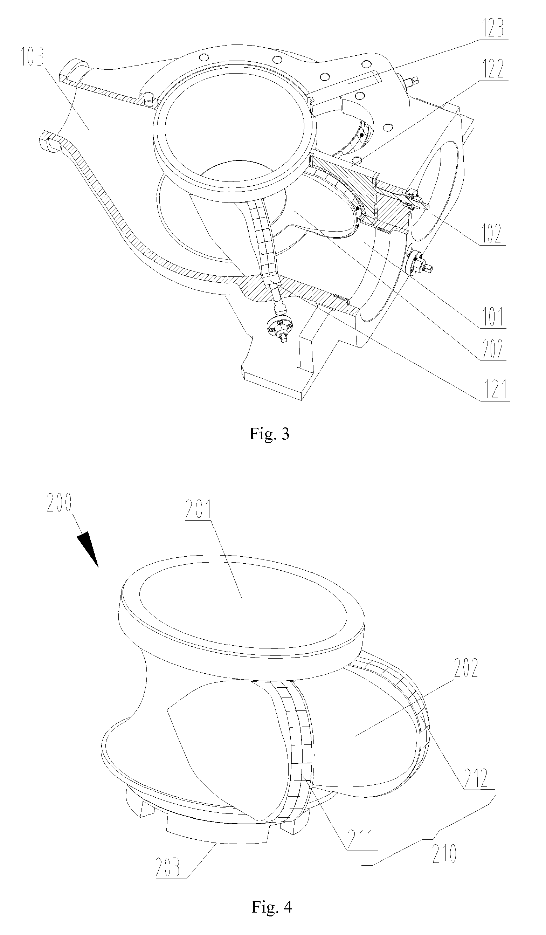

Referring to Figs. 1-3, Fig.1 is a schematic diagram of the three-dimensional structure of the distributing valve provided by the present invention; Fig. 2 is a schematic diagram of the sectional structure of the distributing valve shown in Fig. 1; and Fig. 3 is a schematic diagram of the three-dimensional assembling structure of the distributing valve shown in Fig. 1.

The distributing valve of the pumping mechanism provided by the present invention comprises a valve casing 100 and a valve core 200. In combination with Figs. 1 and 3, the valve casing 100 is in a case-shape structure and is formed with a pumping chamber therein. The valve casing 100 comprises a discharge hole 103 throughout the casing wall, a first suction hole 101 and a second suction hole 102; the discharge hole 103, the first suction hole 101 and the second suction hole 102 all communicate with the pumping chamber and the outside. The first suction hole 101 and the second suction hole 102 respectively communicate with a first conveying cylinder and a second conveying cylinder (not shown in the drawings), and the discharge hole 103 communicates with the conveying pipe (not shown in the drawings) of a distributing mechanism.

In combination with Fig. 2, referring to Fig. 4, Fig. 4 is a schematic diagram of the three-dimensional structure of the valve core in the distributing valve provided by the present invention. The valve core 200 comprises a distributing port 202 and a feed port 201, and the feed port 201 communicates with a hopper or other predetermined material containers; in this embodiment, the valve core 200 has a tube-shape structure, the distributing port 202 is located within its tube wall face and is opened towards the side face; the feed port 201 is located in the upper end and faces upward. The valve core 200 can has a tee structure and can be provided with a discharge hole 203 in the bottom and with a discharge plate corresponding to the discharge hole 203. During the pumping, the discharge plate can be used to close the discharge hole 203; after a pumping task is finished, the discharge plate can be rotated or removed, so that the material remaining in the valve core 200 is discharged, and then the removal of the material and the cleaning of the distributing valve are made convenient.

As shown in Figs. 1-3, the valve core 200 is located in the pumping chamber of the valve casing 100, and the valve core 200 is in rotating connection with the valve casing 100, and then a main rotating axis O is formed; in this embodiment, the peripheral face of the upper end portion of the valve core 200 is in rotating matching with the inner wall face of the upper port of the valve casing 100; meanwhile, the peripheral face of the lower end portion of the valve core 200 is in rotating matching with the inner wall face of the lower port of the valve casing 100. And a pumping channel is formed between the peripheral face of the valve core 200 and the inner wall face of the pumping chamber.

Referring to Figs. 2 and 4, the peripheral face of the valve core 200 is provided with two cutting plates 210 respectively protruding from two sides of the distributing port 202, and the two cutting plates 210 are both parallel to the main rotating axis O, that is, the extending direction of the cutting plates 210 is parallel to the main rotating axis O; for the convenience of description, the two cutting plates 210 are respectively represented with 211 and 212; the outer side faces of the cutting plates 211 and 212 are rotatably sealedly matched with the sealing face of the valve casing 100; when the valve core 200 is rotating with respect to the valve casing 100, the outer side faces of the cutting plates 211 and 212 can rotatably match the sealing face of the valve casing 100, and during the rotation, the sealing of the matching face can be kept so that the distributing port 202 keeps isolated from the pumping channel.

During the rotation of the valve core 200 with respect to the valve casing 100, the distributing valve conducts state switching. In a first state, the distributing port 202 corresponds to the first suction hole 101 of the valve casing 100 and communicates with the first suction hole 101 through the space between the cutting plate 211 and the cutting plate 212, the cutting plate 211 and the cutting plate 212 keep the distributing port 202 and the pumping channel isolated from each other at two sides, and then the second suction hole 102 can communicate with the discharge hole 203 via the pumping channel; now, the first conveying cylinder communicating with the first suction hole 101 can suck material, and sucks the material in the hopper or other material container into its inner chamber through the suction passage formed of the feed port 201, the distributing port 202 and the first suction hole 101; the second conveying cylinder communicating with the second suction hole 102 can conduct pumping, and pumps a predetermined amount of material into a conveying pipe via the pumping channel and the discharge hole 203.

After the first conveying cylinder has sucked material and the second conveying cylinder has pumped the material, the valve core 200 rotates a certain angle with respect to the valve casing 100; during the rotation, the outer side faces of the cutting plate 211 and the cutting plate 212 are rotatably sealedly matched with the sealing face of the valve casing 100, and the cutting plate 212 cuts the material near the inner opening of the second suction hole 102 so that the distributing valve switches to the second state.

In the second state, the distributing port 202 is made to face the second suction hole 102 and communicate with the second suction hole 102 through the space between the cutting plate 211 and the cutting plate 212; meanwhile, the first suction hole 101 is made to communicate with the discharge hole 203 via the pumping channel; now, the first conveying cylinder communicating with the first suction hole 101 can pump material, and the second conveying cylinder communicating with the second suction hole 102 can suck material.

Repeated switching of the first state and the second state can make the pumping mechanism pump the material at a certain flow amount.

Compared with the prior art, in the distributing valve provided by the present invention, the outer side face of the cutting plate 211 is rotatably sealedly matched with the sealing face of the valve casing 100 and forms the cutting portion of the distributing valve; as the cutting portion has a small matching area, then the matching precision of the matching face can be easily improved, and then the sealing performance of the cutting portion is ensured; likewise, as the matching face of the cutting portion is small, during the cutting the material generates a small friction force and wearing to the matching face, thus the friction generated by the cutting portion can be decreased, and the driving force needed by driving the rotation of the valve core 200 is decreased, and the energy consumption of the state switching of the distributing valve is lowered.

In this embodiment, the outer side faces of the cutting plate 211 and the cutting plate 212 are both arc-shaped; this structure can ensure the smoothness of the matching face and alleviate the adhesion between the materials and the valve core 200 and the valve casing 100. Of course, according to actual needs, the outer side faces of the cutting plate 211 and the cutting plate 212 can be in other shapes, such as rectangle and triangle.

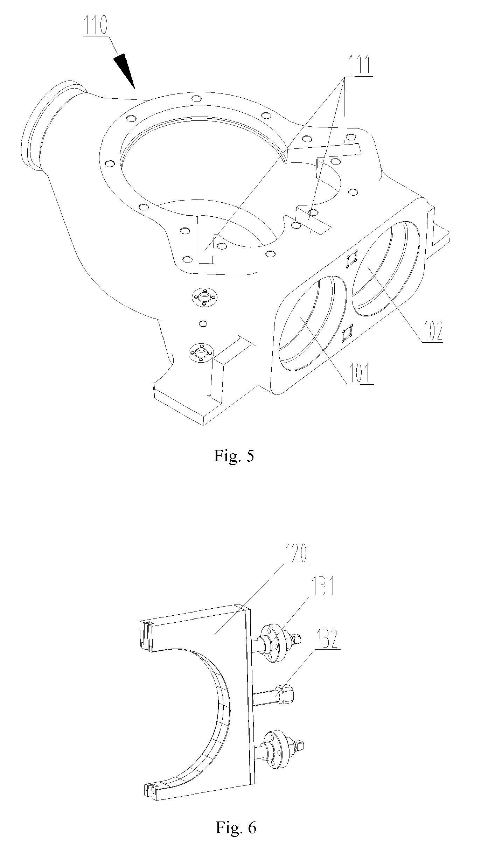

To conveniently adjust the matching gap of the rotatable sealed matching face, the valve casing 100 provided by the present invention further comprises a valve body 110, a seal adjustment plate 120 and an adjustment assembly. In combination with Fig. 3, referring to Figs. 5 and 6, Fig. 5 is a schematic diagram of the structure of the valve body in the distributing valve provided by the present invention; and Fig. 6 is a schematic diagram of the structures of the seal adjustment plate and the adjustment assembly. The valve casing 100 comprises a valve body 110, three seal adjustment plates 120 and three sets of adjustment assemblies; and the three seal adjustment plates 120 correspond to the three sets of adjustment assemblies one by one. Three adjustment plate grooves 111 are formed in the valve body 110, the three seal adjustment plates 120 can respectively be radially and slideably mounted in the three adjustment plate grooves, the term "radially and slideably" is referred to in view of the main rotating axis O, that is, they can slide in the direction distal from or proximate to the main rotating axis O; the inner side faces of the respective seal adjustment plates 120 face the peripheral face of the valve core 200, the inner side faces of the three seal adjustment plates 120 are mounted on the same arc and jointly form the sealing face of the valve casing 100, and therefore, in the direction perpendicular to the main rotating axis O, the sealing face of the valve casing 100 is formed by three points. As shown in Fig. 3, in the first state of the distributing valve, the outer side face of the cutting plate 221 and the outer side face of the cutting plate 222 are respectively sealedly matched with the inner side face of the first seal adjustment plate 121 and the inner side face of the second seal adjustment plate 122; when the distributing valve switches to the second state, the outer side face of the cutting plate 221 and the outer side face of the cutting plate 222 are respectively sealedly matched with the inner side face of the second seal adjustment plate 122 and the inner side face of the third seal adjustment plate 123. In this embodiment, the rotatable sealed matching structure of the seal adjustment plate 120 and the cutting plate 210 can better reduce the area of the matching face of the cutting portion, reduce the driving force needed by the rotation of the valve core 200, and ensure the processing precision of the matching face of the cutting portion and the sealing performance of the matching face of the cutting portion.

As shown in Fig. 6, in the distributing valve provided by the present invention, the adjustment assembly comprises an adjustment screw 131 and a locking screw 132. Wherein, the adjustment screw 131 is in rotating connection with the seal adjustment plate 120 at the inner end, and keeps fixed with the seal adjustment plate 120 in the direction of its rotating centre line; the outer end is connected with the valve body 110 via threads; therefore, rotating the adjustment screw 131 can move the seal adjustment plate 120 with respect to the valve body 110 in the radial direction of the valve core 200; thus the matching gap between the inner side faces of the seal adjustment plates 120 and the outer side faces of the cutting plates 210 is adjusted. The locking screw 132 is connected with the valve body 110 via threads and abuts against the outer side face of the seal adjustment plate 120 at the inner end, and rotating the locking screw 132 can keep the seal adjustment plate 120 and the valve body 110 fixed correspondingly and avoid or alleviate the motion of the seal adjustment plate 120. In this embodiment, each set of adjustment assembly comprises two adjustment screws 131 to adjust the seal adjustment plate 120 at the upper portion and the lower portion; and the locking screw 132 is provided between the two adjustment screws 131. One skilled in the art could understand that the adjustment assembly can have multiple structures, for example, the inner end of the adjustment screw 131 is not restricted to be rotatably connected with the seal adjustment plate 120, and they can also be fixedly connected, and a rotatable adjustment frame is provided on the valve body 110 and is connected with the adjustment screw 131 via threads, and etc. The adjustment assembly is not restricted to use the thread to adjust the gap, and the gap between the outer side faces of the cutting plates 210 and the inner side faces of the seal adjustment plates 120 can be changed by arranging adjustment sheets with different thicknesses.

In a preferable technical solution, when the outer side faces of the cutting plates 210 match the inner side faces of the seal adjustment plates 120, the corresponding seal adjustment plate 120 and the cutting plate 210 extend in one plane; therefore, the cutting plates 210 can better match the seal adjustment plates 120, and the matching gap between the two can be conveniently adjusted.

When the distributing valve comprises the valve body 110, the seal adjustment plates 120 and the adjustment assemblies, in view of pumping needs, the distributing valve can be made to adapt to different pumping pressures; when a material needs to be pumped to a high or far location, the matching gap between the cutting plates 210 and the sealing face of the valve casing 100 is reduced, and the sealing performance of the distributing valve is improved, so as to increase the pumping pressure of the pumping mechanism; when a material needs to be pumped to a low or near location, the matching gap between the cutting plates 210 and the sealing face can be increased, so as to decrease the driving force needed by driving the rotation of the valve core 200 and improve the driving performance of the distributing valve.

Referring to Figs. 3 and 5, in this embodiment, the upper opening of the adjustment plate groove 111 is located in the upper surface of the valve casing 100, and has a suitable shape and structure, so that the seal adjustment plates 120 can be mounted into the adjustment plate groove 111 from the upper opening; and the upper opening of the adjustment plate groove 111 communicates with the upper port of the valve casing 100, meanwhile, the thickness of the cutting plates 210 is not larger than that of the seal adjustment plates 120. Therefore, the seal adjustment plates 120 can be mounted from the upper opening of the adjustment plate groove 111; meanwhile, the valve core 200 and its cutting plates 210 can also be mounted into the pumping chamber of the valve casing 100 via the upper port of the valve casing 100 and the adjustment plate groove 111; and this structure renders the assembling and the maintenance of the distributing valve convenient.

Due to the above structure, the valve core 200 and the seal adjustment plates 120 need not be achieved by way of the disassembling of the valve body 110, thus the valve body 110 can be integrally formed; the valve body 110 is made to have a high rigidity and strength, and then can meet needs of a high pumping pressure, and the pumping ability of the corresponding pumping mechanism is improved. Of course, the valve casing 100 can also be provided with a suitable cover plate to close the upper opening of the adjustment plate groove 111, so as to ensure the reliability of the distributing valve.

To further improve the wearing resistance and the service life of the cutting portion of the distributing valve, the cutting plate 210 can further comprise a cutting plate body and a hard alloy sheet fixed on the outer side face of the cutting plate body; wherein, the outer surface of the hard alloy sheet forms the outer side face of the cutting plate 210, so as to cut concrete or other materials with the side face. In addition, the seal adjustment plate 120 can also comprise a plate body and a hard alloy sheet fixed at the outer side face of the plate body, and the surface of the hard alloy sheet towards the valve core 200 forms the inner side face of the seal adjustment plate 120; therefore, the wearing resistance of the cutting portion of the distributing valve is improved and the service life of the distributing valve is prolonged while maintaining the above technical effect.

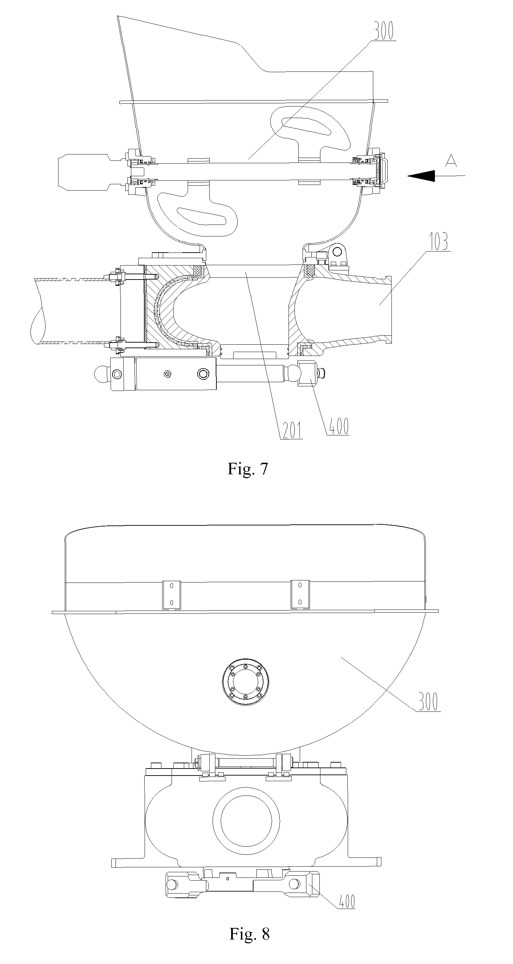

Based on the above distributing valve, the present invention also provides a pumping mechanism. Referring to Figs. 7 and 8, Fig. 7 is a schematic diagram of the front structure of the pumping mechanism provided by the present invention; and Fig. 8 is a A-direction diagram of Fig. 7. The pumping mechanism comprises a conveying cylinder, a material container and a distributing valve; the distributing valve can be any of the above distributing valves; the material container is a hopper 300 with a stirring device, and the hopper 300 is provided with a discharge port facing downward; the feed port 201 of the valve core 200 of the distributing valve is opposite to and communicates with the discharge port of the hopper 300; in this embodiment, the hopper 300 is located above the distributing valve, and the discharge port is located in the bottom wall of the hopper 300; therefore, the self-flowing characteristic of the material can be used, and then the resistance to the flow of the material is reduced, the suction performance of the pumping mechanism is improved, and the blocking of the pipe during the pumping is alleviated. In this embodiment, a driving mechanism 400 is further provided and comprises a swing arm and a swing arm oil cylinder, and the swing arm is fixed with the lower end of the valve core 200; the swing arm oil cylinder is fixed with a predetermined base at one end, and is hinged with the swing arm at the other end; and when the swing arm oil cylinder is extending and retracting, the state switching of the distributing valve is conducted by rotating the valve core 200 with the swing arm.

In this embodiment, the bottom of the hopper 300 is connected with the valve casing 100 through a laterally extending hinged shaft; therefore, the hopper 300 can be made to rotate with respect to the distributing valve about a horizontal axis, and the hopper 300 is made to tilt within a predetermined angle; then the removing and cleaning of the material in the hopper 300 and the maintenance of the internal stirring device can be conveniently conducted.

Based on the above pumping mechanism, the present invention further provides a concrete pumping machine comprising the above pumping mechanism, and the concrete pumping machine comprises a machine body and the above pumping mechanism, and the pumping mechanism is mounted on the machine body. The concrete pumping machine can be a concrete pump truck, a concrete stir pump truck, a concrete distributing mechanism, or other pumping machines which can pump the concrete.

Described above are just preferable embodiments of the present invention. It should be indicated that, for one skilled in the art, various modifications and improvements can be made without departing from the principles of the present invention, and such modifications and improvements shall all be contained within the scope of protection of the present invention.

## Claims

1. A distributing valve of a pumping mechanism, comprising a valve casing (100) and a valve core (200) located in the pumping chamber of the valve casing (100), and the valve core (200) is rotatably connected to the valve casing (100), thus forming a main rotating axis (O); the valve casing (100) has a discharge hole (103) throughout the casing wall, a first suction hole (101) and a second suction hole (102); the valve core (200) has a distributing port (202) and a feed port (201) communicated with a material container; a pumping channel is formed between the peripheral face of the valve core (200) and the inner wall face of the pumping chamber, wherein, the peripheral face of the valve core (200) is provided with two cutting plates (210) protruding from two sides of the distributing port (202) respectively and being parallel to the main rotating axis (O); the outer side faces of the two cutting plates (210) are rotatably sealedly matched with the sealing face of the valve casing;
in a first state, the distributing port (202) is communicated with the first suction hole (101) through the space between the two cutting plates (210); and in a second state, the distributing port (202) is communicated with the second suction hole (102) through the space between the two cutting plates (210).

2. The distributing valve of a pumping mechanism according to claim 1, wherein, the outer side faces of the cutting plates (210) is arc-shaped surfaces.

3. The distributing valve of a pumping mechanism according to claim 1, wherein, the valve casing (100) comprises a valve body (110) and a seal adjustment plate (120); the seal adjustment plate (120) can be radially and slideably mounted within the adjustment plate groove (111) of the valve body (110), and the inner side face of the seal adjustment plate (120) at least forms a part of the sealing face of the valve casing (100); and the valve casing further comprises an adjustment assembly changing the matching gap between the seal adjustment plate (120) and the cutting plates (210).

4. The distributing valve of a pumping mechanism according to claim 3, wherein, when the outer side faces of the cutting plates (210) match the inner side face of the seal adjustment plate (120), the seal adjustment plate (120) corresponding to the matching and the cutting plates (210) extend in one plane.

5. The distributing valve of a pumping mechanism according to claim 3, wherein, the valve casing (100) comprises three said seal adjustment plates (120), and the inner side faces of the three seal adjustment plates (120) form the sealing face; in the first state, the outer side faces of two said cutting plates (210) are respectively sealedly matched with the inner side face of a first seal adjustment plate (121) and the inner side face of a second seal adjustment plate (122), and in the second state, the outer side faces of two said cutting plates (210) are respectively sealedly matched with the inner side face of the second seal adjustment plate (122) and the inner side face of a third seal adjustment plate (123).

6. The distributing valve of a pumping mechanism according to any of claims 3 to 5, wherein, the peripheral face of the upper end portion of the valve core (200) is in rotating matching with the inner wall face of the upper port of the valve casing (100); the upper opening of the adjustment plate groove (111) is located within the upper surface of the valve casing (100), and the seal adjustment plates (120) are mounted into the adjustment plate groove (111) from the upper opening; the upper opening communicates with the upper port of the valve casing (100), and the thickness of the cutting plates (200) is not larger than that of the seal adjustment plates (120).

7. The distributing valve of a pumping mechanism according to claim 6, wherein, the peripheral face of the lower end portion of the valve core (200) is in rotating matching with the inner wall face of the lower port of the valve casing (100); and the valve body (100) is integrally formed.

8. The distributing valve of a pumping mechanism according to any of claims 3 to 5, wherein, the cutting plate (210) comprises a cutting plate body and a hard alloy sheet fixed on the outer side face of the cutting plate body, and the outer surface of the hard alloy sheet forms the outer side face of the cutting plate (210); or,
the seal adjustment plate (120) comprises a plate body and a hard alloy sheet fixed at the inner side face of the plate body, and the surface of the hard alloy sheet towards the valve core (200) forms the inner side face of the seal adjustment plate (120).

9. A pumping mechanism, comprising a conveying cylinder, a material container and a distributing valve, and the material container being provided with a discharge port facing downward, wherein, the distributing valve is the distributing valve of the pumping mechanism according to any of claims 1 to 8, and the feed port (201) of the valve core (200) communicates with the discharge port.

10. A concrete pumping machine comprising a machine body and a pumping mechanism, wherein, the pumping mechanism is the pumping mechanism according to claim 9, and is mounted on the machine body.
